# EUROPEAN PATENT SPECIFICATION

(11) **EP 1 881 513 B1**
(45) Date of publication and mention of the grant of the patent: **16.12.2009**
(21) Application number: 07118148.1
(22) Date of filing: 08.10.2003
(51) Int. Cl.: H01H 13/83, H01H 9/18, H04M 1/72

(54) **Selective keyboard illumination**
Selektive Tastaturbeleuchtung
Éclairage sélectif du clavier

(43) Date of publication of application: 23.01.2008
(62) Divisional of application: 03022864.7
(73) Proprietor: Research In Motion Limited, Waterloo, Ontario N2L 3W8 (CA)
(72) Inventor: Griffin, Jason T., Kitchener Ontario N2P 2L3 (CA); Lazaridis, Mihal, Waterloo Ontario N2T 2K1 (CA); Lowles, Robert, J., Waterloo Ontario N2T 2J5 (CA)
(74) Representative: MERH-IP Matias Erny Reichl Hoffmann

(56) References cited:
- EP-A- 0 872 996
- EP-A- 1 139 639
- EP-A- 1 320 245
- WO-A-03/052574
- US-A- 5 408 060

## Description

### FIELD OF THE INVENTION

The present invention relates generally to the backlighting of keyboards. More particularly, the present invention relates to selectively backlighting portions of a keyboard.

### BACKGROUND OF THE INVENTION

It is common for a mobile device to receive its input through a keyboard or keypad. A typical mobile device provides either a numeric keypad based on a telephone keypad, or a keyboard based on a standardized layout such as a QWERTY keyboard. To provide a reduced form factor keyboard, or to allow a keypad layout to function as a keyboard, it is common for a number of the keys to be associated with a plurality of values. For example, the key for the letter 'W' can also function as '1' in a different mode. Other keys will have similar multiple values associated with different input modes, or may be inoperative in certain modes. To toggle between input modes, a user typically presses a shift key, a toggle key, or some combination of keys. An indication of the selected input mode is typically provided on the screen of the mobile device to indicate the active input mode to the user. However, the keyboard itself does not provide an indication of the current input mode.

Mobile devices are also known that display keyboard and keypad representations on touch-screen liquid crystal displays. Typically, an appropriate keyboard representation is displayed in response to user selection of an input mode. For example, selecting a telephone application results in display of a telephone keypad, whereas selection of a notepad application results in display of a full keyboard for text input. Such touch-screen representations are advantageous in that only the currently active keyboard representation is displayed to the user. However, touch screens have several drawbacks including cost, thickness, fragility and lack of optical clarity.

Backlighting of both keyboards and display screens is well-known for mobile devices. Backlighting the keys of a keyboard or keypad is typically achieved by situating light emitting diodes (LEDs) or an electroluminescent panel or lamp (EL) behind the keys, or using light piping to illuminate the keys with a remote light source. Such backlighting permits a user to see the keys in low light conditions. Conventional backlighting is limited to selection of different backlighting levels, such as "high" and "low", and does not provide selective, or input mode-dependent backlighting.

It is, therefore, desirable to provide a keyboard that can clearly indicate the present mode of input and provides backlighting to allow use in low light conditions.

The PCT patent application WO 03/052574 describes a method and an apparatus for indicating available input options of electronic terminal devices by selectively highlighting active inputting means.

The US patent US5408060 describes an illuminated keyboard in which the keys are operable in at least two different modes.

### SUMMARY OF THE INVENTION

In a first aspect of the present invention there is provided a mobile device having a keyboard. The mobile device comprises an input mode selector for determining an active input mode of the keyboard; and a backlight controller responsive to the active input mode provided by the input mode selector for controlling at least one light source to selectively illuminate an active portion of the keyboard.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is an illustration of a known mobile device;
Figure 2 is an illustration of a mobile device embodying selective keyboard illumination according to an aspect of the present invention in a numeric mode;
Figure 3 is an illustration of a mobile device in a numeric mode with differentiated illumination levels, according to another aspect of the present invention;
Figure 4 is an illustration of the mobile device of Figure 3 in a full keyboard mode at an intermediate illumination level, in accordance with a further aspect of the invention;
Figure 5 is an illustration of a mobile device in an alphabetic mode with partial key illumination according to another aspect of the invention;
Figure 6 is an illustration of the mobile device of Figure 5 in a non-alphabetic mode;
Figure 7 is an illustration of a mobile device enabled for selective keyboard illumination according to a still further aspect of the invention in an alphabetic mode;
Figure 8 is an illustration of the mobile device of Figure 7 in a non-alphabetic mode;
Figure 9 is an illustration of a known mobile device with a keypad;
Figure 10 is an illustration of a mobile device having selective keyboard illumination in a directional mode;
Figure 11 is an illustration of a mobile device in an alphabetic mode with partial key illumination according to another aspect of the invention;
Figure 12 is an illustration of the mobile device of Figure 11 in a numeric mode;
Figure 13 is a block diagram of a mobile device incorporating a selective keyboard illumination system; and
Figure 14 is a flow diagram of a mobile device illustrating a process for selective keyboard illumination.

### DETAILED DESCRIPTION

Generally, a method and system for illuminating a keyboard using selective backlighting, or illumination, to indicate the input mode of the keyboard is provided. Selective backlighting allows different input modes to be presented to the user by illuminating portions of the keyboard or portion of keys corresponding to selected indicia. Active portions can be highlighted, through selective illumination, in a number of ways, including illumination at different intensity levels, or with different colors. In some embodiments, selective illumination according to the present invention involves illuminating a portion of the keyboard that is active, while leaving inactive keys unilluminated. For example, in a telephone dialling application only the keys corresponding to the keys of a numeric keypad are both active and illuminated. The active keys need not form a contiguous region. For example, in certain embodiments, such as a game play or directional input mode, non-contiguous keys used to move a cursor or icon are illuminated. In other embodiments of the present invention, selective illumination takes the form of differential illumination levels for different portions of the keyboard. This allows the user of the mobile device to view the full keyboard in low light situations, but still differentiate active and inactive portions. A further embodiment provides selective illumination for each input mode using a different illumination color. This permits a user to readily recognize the current input mode. In another embodiment, selective illumination is used to illuminate particular indicia on each key or on selected keys. This further refinement permits the current mode of a key having multiple key assignments to be clearly indicated to the user. Examples of these embodiments are described with reference to the figures below.

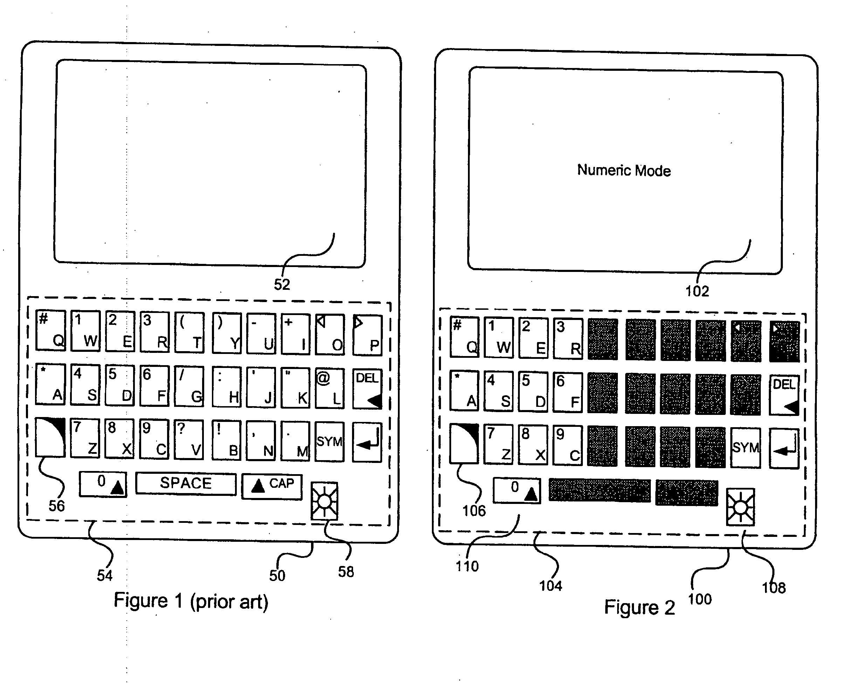

While known implementations of keyboards for mobile devices utilize both multimode input keyboards and backlit keyboards, they rely upon an on-screen indicator, or context, to indicate which of the multiple input modes is active. Figure 1 illustrates such a mobile device. Mobile device 50 has a display 52 and a keyboard 54. Keyboard 54 has a backlight key 58 for activating the keyboard backlighting, and a toggle key 56 used to switch between an alphanumeric, or standard QWERTY keyboard, and a non-alphabetic input mode, such as a numeric keypad. The selection of input modes can be controlled either by selection of the mode through use of the toggle key 56, another function key, or through software. Backlight key 58 activates a backlight mode in which both display 52 and keyboard 54 are illuminated. Backlighting of keyboard 54 is typically implemented by activating a series of light sources, such as LEDs or EL sources, situated behind keyboard 54. Alternate embodiments known in the art employ light pipes to distribute light from one or more light sources to illuminate the keyboard.

Figure 2 illustrates mobile device 100 embodying selective keyboard illumination according to an aspect of the present invention. Mobile device 100 has a display 102 and a keyboard 104 including a toggle key 106 and a backlight key 108. When mobile device 100 executes an application such as a telephone dialer, in which only the numeric keys are active, numeric portion 110 is illuminated, while the remainder of the keyboard remains unlit. In low light conditions this causes numeric portion 110 to be visible, while in regular light conditions it preferably provides a visible distinction between the illuminated and unilluminated portions. When using another application, such as an email application, the entire keyboard 104 is illuminated. In one embodiment, the user can still use toggle key 106 to switch or cycle between the various input modes, thereby causing the mobile device to cycle through the backlighting configurations associated with each of the defined input modes. One skilled in the art will appreciate that selective illumination can be used to either replace or augment on screen indication of the active mode.

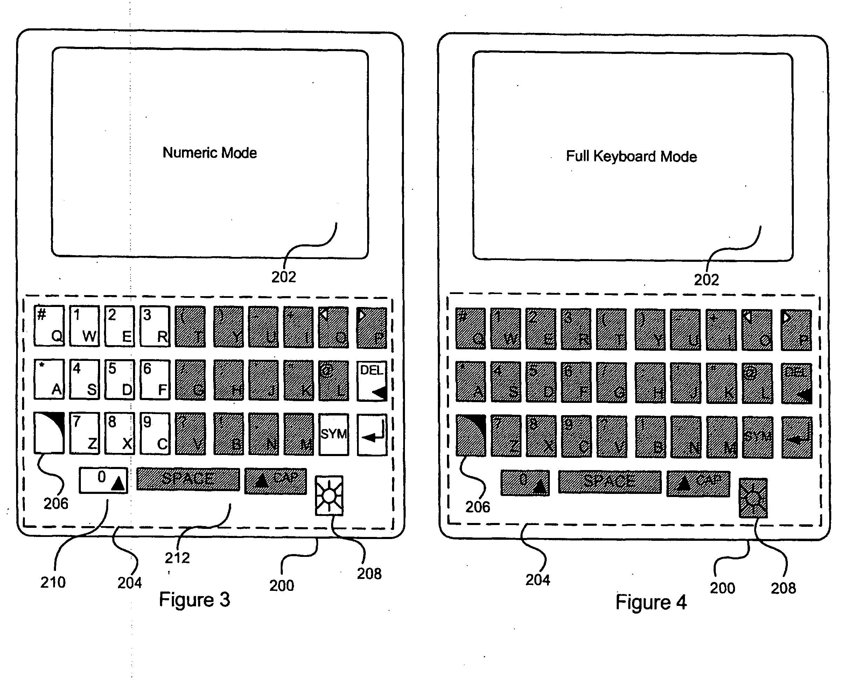

Figure 3 illustrates a keyboard using different illumination levels to indicate the active portion of the keyboard. As above, the mobile device comprises a display 202 and a keyboard 204 having a toggle key 206 and a backlight key 208. In contrast to the embodiment of Figure 2, mobile device 200 provides multiple levels of illumination to portions of keyboard 204. Thus in a numeric mode, the non-numeric portion 212 can be backlit to an intermediate illumination level, and numeric portion 210 can be backlit at a higher illumination level to provide the user of mobile device 200 with the ability to view all the keys in low light conditions, but still know that the numeric keypad is active. Figure 4 illustrates the keyboard of Figure 3 in a full keyboard mode, where the entire keyboard 204 is backlit at the intermediate level. Such differential illumination can also be provided as an optional mode for the embodiment described with reference to Figure 2, to provide three different illumination modes.

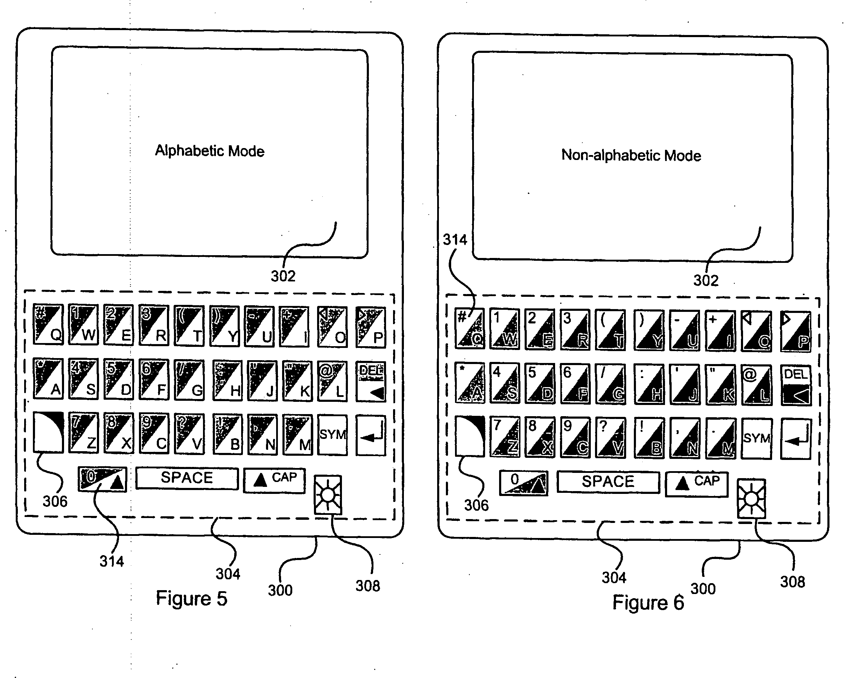

Another embodiment of the present invention is illustrated in Figures 5 and 6. Figure 5 illustrates mobile device 300 with a display 302 and a keyboard 304 having a toggle key 306 and a backlight key 308. Keyboard 304 is in an alphabetic input mode. In this mode, selective backlighting is employed to illuminate only the alphabetic portion of keys having multiple key assignments. Thus portion 314 corresponding to the alphabetic portion of a key is illuminated while the remainder of the key is unilluminated. Figure 6 illustrates the keyboard of Figure 5 in a non-alphabetic mode where selective backlighting is employed to illuminate the non-alphabetic portion of each key, so that illuminated key section 314 corresponds to the non-alphabetic portion of a key, while the remainder of the key remains unlit.

One skilled in the art will appreciate that the selective illumination of key portions can equally be employed for illuminating key portions only in an active keyboard portion such as numeric portion 110 of Figure 2 when only a subset of keys in keyboard 304 are needed. For example, in one implementation, a telephone dialer application would preferably cause only the numeric values of keys in keyboard 304 to be illuminated. Additionally, the illuminated portion of the keys in keyboard 304 would preferably change as the user used toggle key 306 to switch between input modes. The user can preferably deactivate the backlight through use of backlight key 308. In a refinement of this embodiment, the alphabetic and non-alphabetic values of the keys are illuminated by backlights of different colors. This allows the alphabetic and non-alphabetic input modes to be easily distinguished from each other by assigning a different color to each of the input modes, for example the alphabetic values may be illuminated by a blue light, while the non-alphabetic values are illuminated by a red light. One skilled in the art will readily appreciate that any arrangement of colors can be used, employing known color illumination methods. One such embodiment provides partial illumination of each key, with all related key sections illuminated by the same light source, and coloration provided through the use of filters in the keys. In an alternate embodiment, alphabetic key portions are illuminated by a colored light source, while the non-alphabetic key portions are illuminated by a differently colored light source. The light source in the above examples can be either local, or remote as described earlier.

It should be noted that the coloration difference does not have to be strictly related to alphabetic and non-alphabetic values, as it can be applied to different keyboard portions. For example, a numeric keypad can be illuminated using one color when a keypad mode is involved, and the full keyboard can be lit in a different color when a full keyboard mode is employed. Similarly, the multi-colored backlighting of different portions of keyboard 104 can also allow enhanced game control in a gaming mode, by providing different colored keys depending on the game function they control.

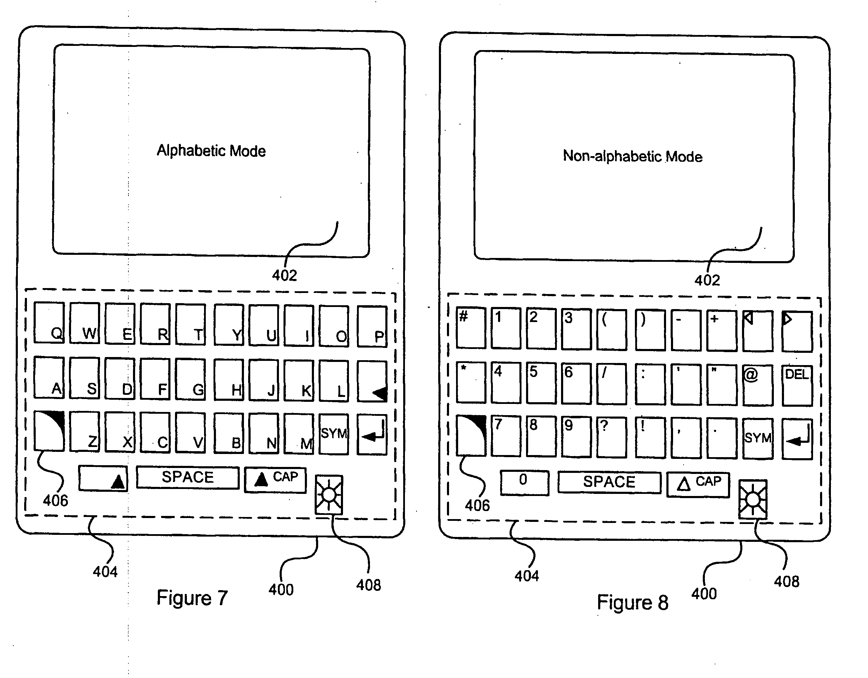

Figures 7 and 8 illustrate a further embodiment of the present invention on mobile device 400. The mobile device 400, like those described above, includes a display 402 and a keyboard 404 having a toggle key 406 and a backlight key 408. Through any of a number of techniques, including light cancellation and the use of different phosphors or composites, differential illumination can be utilised to not only illuminate one of the selected input modes, but also to cause the other input values assigned to a key to fade or become substantially invisible. Thus, keyboard 404 in the embodiment of Figure 7 only shows the alphabetic values for its illuminated keys. In contrast the same keyboard 404 in Figure 8 obscures the alphabetic values of the illuminated keys and displays only the non-alphabetic values. The obscuring of key values allows a plurality of values to be assigned to a single key while minimizing the chance of user confusion as to what the active input mode is. Thus, mobile device 400 can have a plurality of key assignments invoked by different modes. For example in an unillustrated gaming mode, the keys would display only directional arrows and game controls, while these key assignments would be obscured in other modes. As noted, this embodiment can be implemented through the use of optical cancellation, or through the use of different phosphors that illuminate, and distinguish themselves from the natural color of a key, under different lighting conditions. One skilled in the art will readily appreciate that a number of other such approaches can be implemented to achieve this result. One such approach is the use of characters colored a neutral shade to match the color of the key. Under backlighting, the characters become visible. To improve optical cancellation, a light sensor can be provided in device 400 to detect the ambient light conditions. Variable strength light sources, responsive to the detected light conditions, can then be used to adjust the light levels and improve optical cancellation effects. One skilled in the art will appreciate that backlight key 406 and toggle key 408 operates as they did in previously described embodiments.

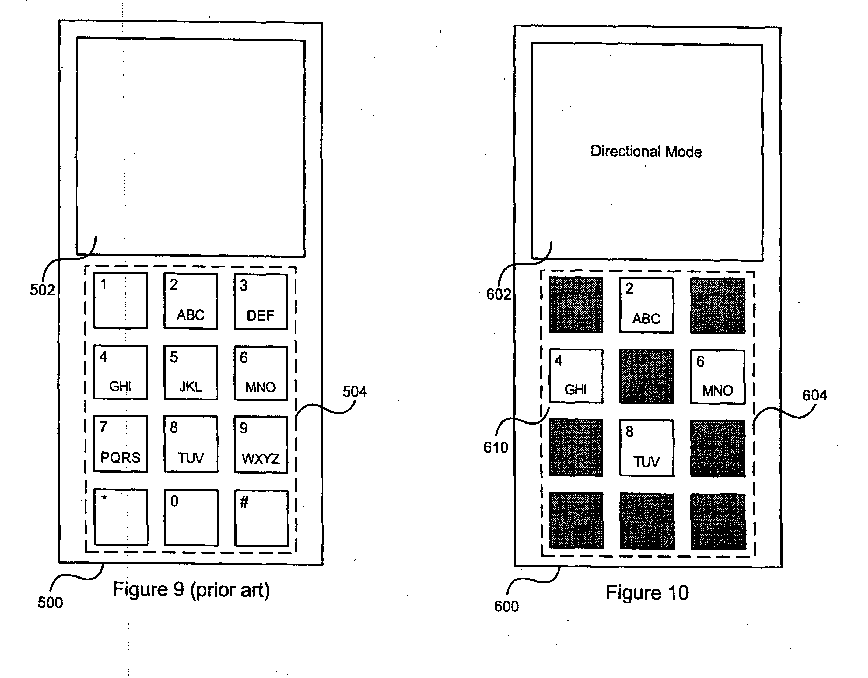

Figure 9 illustrates a known mobile device 500 having the form factor of a standard cellular phone handset. Mobile device 500 has keypad 504 in the form of a standard telephone keypad with alphabetically-ordered alphabetic key assignments and display 502.

In accordance with an aspect of the present invention, Figure 10 illustrates a handset, as in Figure 9, in a directional mode, for use in such applications as game play modes and for navigating web pages. Mobile device 600 has keypad 604 and display 602. In its presently illustrated state, mobile device 600 is in a directional mode and provides a directional control pad through illuminated keys 610 on keypad 604. Such a directional mode is achieved using selective illumination techniques as described above. The embodiment of Figure 10 clearly illustrates the application of selective illumination of keys in a designated keyboard portion for illuminating active keys as designated, for example, by a software application executed on a device.

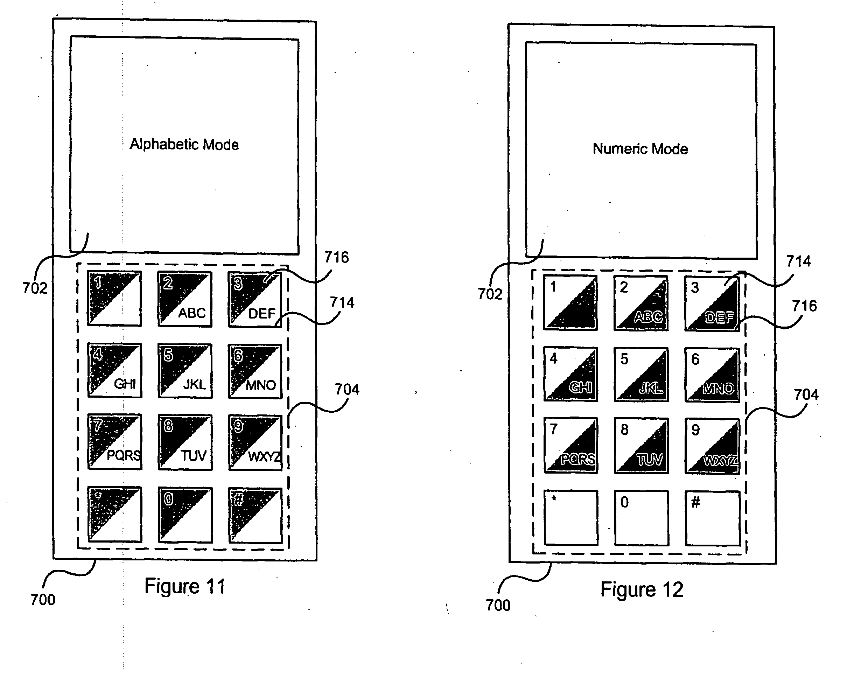

Figures 11 and 12 illustrate the illumination of key portions 714 on keypad 704 of mobile device 700 to distinguish between the active modes of keypad 704 in a manner described in relation to Figures 5 and 6. In the alphabetic mode shown in Figure 11, the illuminated key portion 714 of each key on the keypad 704 corresponds to an alphabetic portion of the key, whereas the non-illuminated portion 716 corresponds to a numeric portion of the key. In the numeric mode shown in Fig. 12, the portions 714 and 716 are reversed, such that numeric portions of keys are illuminated. One skilled in the art will readily appreciate that either a single color illumination, or multi-colored illumination of each key in keyboard 704 can be implemented using known methods, including those discussed with relation to mobile device 300 as illustrated in Figures 5 and 6. One skilled in the art will additionally appreciate that the selective illumination technique described with respect to Figures 7 and 8 can be applied to a mobile device 700 having the form factor of a cellular phone handset without difficulty, and without departing from the scope of the present invention.

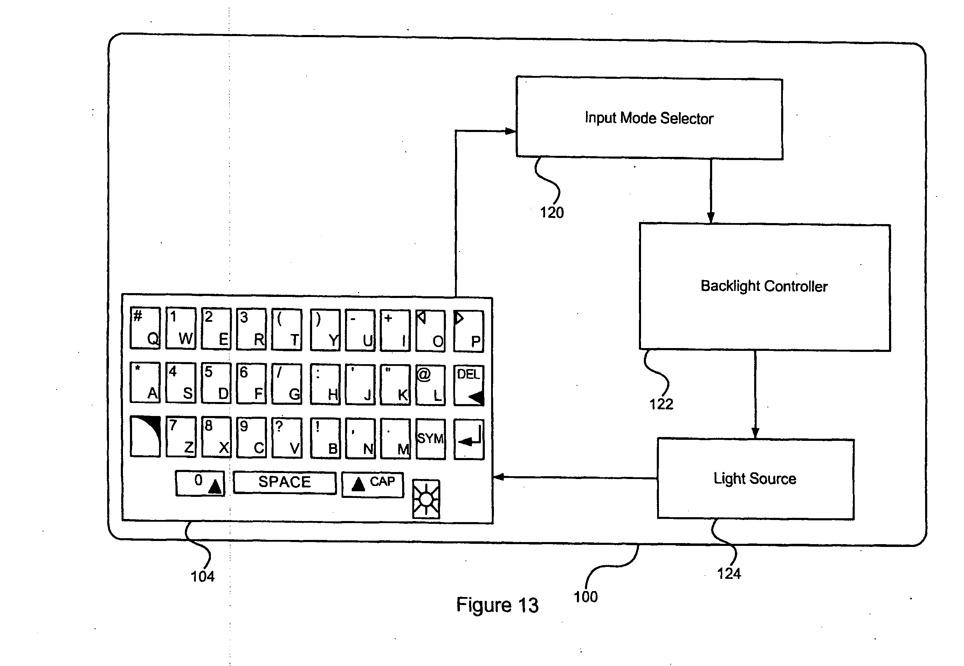

Figure 13 is a block diagram of mobile device 100 illustrating an implementation of a selective keyboard illumination system. Backlight controller 122 is used to control light sources 124 so that the active portion of keyboard 104 is illuminated. The determination of which portion of the keyboard 104 is the active portion is made by input mode selector 120, which then provides backlight controller 122 with an indication of the active portion. The determination of the active portion is made based on any of a number of factors, including, for example, the software application executed by mobile device 100, the user's selection of an input mode through use of toggle key 106, and backlight key 108. As described above, the application executed by mobile device 100 can set a preferred active mode, for example an email application may default to alphabetic mode, that the user can override through use of toggle key 106. In addition, in some embodiments, the user can change the backlighting of the non-active portion of the keyboard 104, as illustrated with respect to the embodiment of Figure 3, through use of the backlight key 108. The active portion may refer to either an active portion of the keyboard or an active key portion as previously described.

Thus, in response to a number of factors, which may include the application executed by mobile device 100, and user-defined input received through keyboard 104, input mode selector 120 determines an active mode and provides backlight controller 122 with indication of the active mode. The communication between input mode selector 120 and backlight controller 122 can be facilitated by a number of known techniques, including the use of a direct communication line for transmitting an encoded signal indicating the selected active mode, and the use of predetermined registers to indicate one of a number of predetermined active modes.

Upon receipt of the active mode from input mode selector 120, backlight controller 122 controls light source 124 to selectively illuminate keyboard 104. In a first embodiment, corresponding to Figure 2, upon receiving indication that the active input mode is a numeric mode, backlight controller 122 activates a set of backlights under the portion of keyboard 104 corresponding to the numeric portion, illustrated as 110 in Figure 2. Upon receipt of an indication that the active input mode is the full keyboard mode, backlight controller 122 activates all the backlights behind keyboard 104. In another embodiment, the backlight controller 122 controls remote light sources that provide illumination to the keys through the use of light pipes. In embodiments such as the embodiments of Figure 5 and 6, backlight controller 122 controls light source 124 to illuminate portions of keys in keyboard 104 that correspond to the active portion. One skilled in the art will appreciate that the use of different colored light sources or the illumination of different portions of keys can be achieved through the use of known techniques.

Input mode selector 120 and backlight controller 122 can be implemented either as standalone components, or as software modules executed by the processor of mobile device 200. As standalone components, input mode selector 120 and backlight controller 122 can be implemented as software specifically designed as firmware for execution on a specified hardware platform. Alternatively, input mode selector 120 and backlight controller 122 can be designed as algorithms in an operating system executed by the processor of mobile device 100, or they can be stored as firmware routines that can be called by the operating system executing on the processor of mobile device 100. Those skilled in the art will appreciate that the implementation details provided above are merely exemplary, and any number of implementations can be employed where the functionality of the assigned logical blocks is spread between a number of different elements without departing from the scope of the present invention.

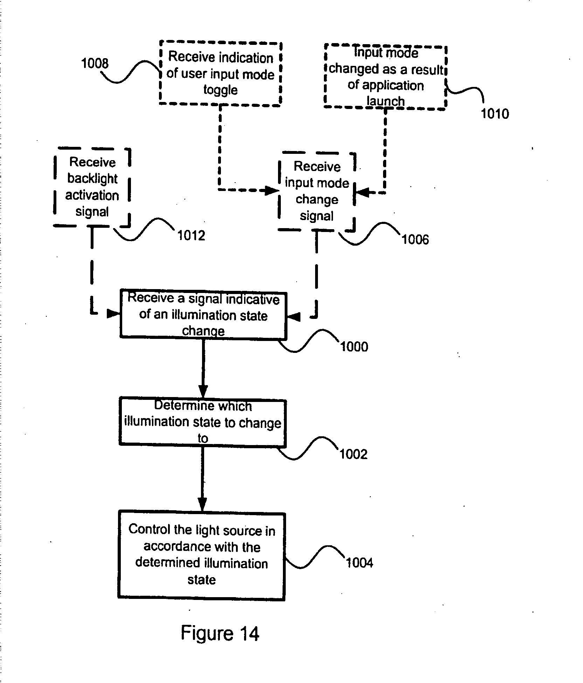

Figure 14 illustrates a method according to an embodiment of the present invention. In step 1000, a control system, such as the system illustrated in Figure 13, receives a signal that indicates that the illumination state is to be changed. In step 1002, a determination of which of the plurality of illumination states is to be selected is made. One skilled in the art will appreciate that different signals received can be received in step 1000. Each of these signals is interpreted in a different manner, so that, for example, a first signal is interpreted as indicating the next state in a cycle of states is to be selected, while another signal is interpreted as indicating that a specific illumination state is to be selected. In step 1004, the light source used to illuminate the keyboard, such as light source 124 illuminating keyboard 104, is controlled to provide the illumination state determined in step 1002. Thus, step 1004 allows a mobile device, such as one of the mobile devices embodying aspects of the present invention previously described, to selectively illuminate the keyboard. As described above the selective illumination can take the form of illuminating portions of the keyboard using different colours, different illumination levels or combinations of the two.

As illustrated in Figure 14, step 1000, where a signal indicative of an illumination state change is received, can optionally include receiving a signal indicative of an input mode change 1006. The receipt of this signal in 1006 is typically in response to the receipt of an indication that the user has toggled the input mode, as shown in step 1008, or in response to the execution of an application that has a default data entry mode, as shown in step 1010. The indication that the user has toggled the input mode is typically received in response to actuation of the toggle key 106. Alternately, step 1000 can optionally include the receipt of a backlight activation signal 1012, which is typically received in response to user actuation of the backlight key 108. One skilled in the art will appreciate that a number of other events can result in the receipt of a signal indication of an illumination state change including timed events and detection of ambient light conditions.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method for selectively illuminating an active portion of a keyboard (404) of a mobile device (400), the keyboard having a plurality of keys each having a plurality of indicia thereon and the mobile device (400) configured for executing at least two applications, the method comprising the steps of:
determining, in response to the execution of one of the at least two applications by the mobile device (400), an active input mode of the keyboard (404) corresponding to the executed application, wherein each of the at least two applications is associated with a respective default active input mode; and,
controlling at least one light source (124) to selectively illuminate an active portion of the keyboard (404) corresponding to one of the plurality of indicia on each of the plurality of keys in response to the determination of the respective default active input mode.

2. The method of claim 1, wherein the at least two applications include one of a telephone dialer application, an email application, a notepad application, a game application and any application specific software.

3. The method of any one of the preceding claims, wherein the active mode is one of a numeric mode, an alphabetic mode, a non-alphabetic mode, a full keyboard mode, a directional mode and a gaming mode.

4. The method of any one of the preceding claims, wherein the at least one light source (124) includes at least one light emitting diode.

5. The method of claim 4, wherein the at least one light emitting diode is connected to the keyboard (404) by at least one light pipe.

6. The method of any one of the preceding claims, wherein the step of controlling at least one light source (124) to selectively illuminate the active portion of the keyboard (404) includes illuminating the active portion using a different illumination level than a non-active portion of the keyboard (404).

7. The method of any one of the preceding claims, wherein the active portion is selectively illuminated using optical cancellation.

8. The method of any one of the preceding claims, wherein the active portion is selectively illuminated using a colored light.

9. The method of claim 8, wherein the active portion is selectively illuminated using a different color than a non-active portion of the keyboard (404).

10. A computer program product for enabling a mobile device (400) to provide selectively illumination of an active portion of a keyboard (404) of the mobile device (400), the computer program product comprising a computer readable medium embodying program code means executable by a processor of the mobile device (400) for implementing the method of any one of claims 1 to 9.

## Patentansprüche

1. Verfahren zum selektiven Beleuchten eines aktiven Teils einer Tastatur (404) einer mobilen Vorrichtung (400), wobei die Tastatur eine Vielzahl von Tasten hat, die jeweils eine Vielzahl von Indicia darauf haben, und die mobile Vorrichtung (400) konfiguriert ist zur Ausführung von zumindest zwei Anwendungen, wobei das Verfahren die Schritte aufweist:
Bestimmen, als Reaktion auf die Ausführung einer der zumindest zwei Anwendungen durch die mobile Vorrichtung (400), eines aktiven Eingabemodus der Tastatur (404) entsprechend der ausgeführten Anwendung, wobei jede der zumindest zwei Anwendungen zu einem jeweiligen standardmäßigen aktiven Eingabemodus gehört; und
Steuern zumindest einer Lichtquelle (124), um selektiv einen aktiven Teil der Tastatur (404) zu beleuchten, der einer der Vielzahl von Indicia auf jeder der Vielzahl der Tasten entspricht, als Reaktion auf die Bestimmung des jeweiligen standardmäßigen aktiven Eingabemodus.

2. Verfahren gemäß Anspruch 1, wobei die zumindest zwei Anwendungen eine Anwendung einer Telefonwähleranwendung, einer Email-Anwendung, einer Notizblock-Anwendung, einer Spiele-Anwendung und einer Anwendungsspezifischen Software umfassen.

3. Verfahren gemäß einem der vorhergehenden Ansprüche, wobei der aktive Modus ein Modus aus einem numerischen Modus, einem alphabetischen Modus, einem nicht-alphabetischen Modus, einem Modus mit vollständiger Tastatur, einem Richtungsmodus und einem Spiele-Modus ist.

4. Verfahren gemäß einem der vorhergehenden Ansprüche, wobei die zumindest eine Lichtquelle (124) zumindest eine Leuchtdiode umfasst.

5. Verfahren gemäß Anspruch 4, wobei die zumindest eine Leuchtdiode mit der Tastatur (404) durch zumindest einen Lichtleiter verbunden ist.

6. Verfahren gemäß einem der vorhergehenden Ansprüche, wobei der Schritt des Steuerns zumindest einer Lichtquelle (124) zum selektiven Beleuchten des aktiven Teils der Tastatur (404) umfasst ein Beleuchten des aktiven Teils unter Verwendung eines unterschiedlichen Beleuchtungspegels als einen nicht-aktiven Teil der Tastatur (404).

7. Verfahren gemäß einem der vorhergehenden Ansprüche, wobei der aktive Teil unter Verwendung einer optischen Löschung selektiv beleuchtet wird.

8. Verfahren gemäß einem der vorhergehenden Ansprüche, wobei der aktive Teil unter Verwendung eines Farblichts selektiv beleuchtet wird.

9. Verfahren gemäß Anspruch 8, wobei der aktive Teil selektiv beleuchtet wird unter Verwendung einer anderen Farbe als ein nicht-aktiver Teil der Tastatur (404).

10. Computerprogrammprodukt, um zu ermöglichen, dass eine mobile Vorrichtung (400) eine selektive Beleuchtung eines aktiven Teils einer Tastatur (404) der mobilen Vorrichtung (400) vorsehen kann, wobei das Computerprogrammprodukt ein Computer-lesbares Medium aufweist, das Programmcodemittel aufweist, die durch einen Prozessor der mobilen Vorrichtung (400) ausführbar sind zur Implementierung des Verfahrens gemäß einem der Ansprüche 1 bis 9.

## Revendications

1. Procédé d'éclairage sélectif d'une partie active d'un clavier (404) d'un dispositif mobile (400), le clavier possédant une pluralité de touches portant chacune une pluralité de repères d'identification et le dispositif mobile (400) étant configuré pour exécuter au moins deux applications, le procédé comprenant les étapes consistant à :
déterminer, en réponse à l'exécution d'une desdites au moins deux applications par le dispositif mobile (400), un mode de saisie actif du clavier (404) correspondant à l'application exécutée, dans lequel chacune desdites au moins deux applications est associée à un mode respectif de saisie actif par défaut ; et
commander au moins une source lumineuse (124) afin d'éclairer sélectivement une partie active du clavier (404) qui correspond à un repère sur la pluralité de repères d'identification, sur chaque touche parmi la pluralité de touches, en réponse à la détermination du mode respectif de saisie actif par défaut.

2. Procédé selon la revendication 1, dans lequel lesdites au moins deux applications comprennent l'une des applications suivantes : application de numérotation téléphonique, application de courriel, application de bloc-notes, application de jeu et logiciel applicatif spécifique quelconque.

3. Procédé selon l'une quelconque des revendications précédentes, dans lequel le mode actif est l'un des modes suivants : mode numérique, mode alphabétique, mode non alphabétique, mode de clavier complet, mode fléché et mode de jeu.

4. Procédé selon l'une quelconque des revendications précédentes, dans lequel ladite au moins une source lumineuse (124) comprend au moins une diode électroluminescente.

5. Procédé selon la revendication 4, dans lequel ladite au moins une diode électroluminescente est connectée au clavier (404) par au moins un guide de lumière.

6. Procédé selon l'une quelconque des revendications précédentes, dans lequel l'étape de commande de ladite au moins une source lumineuse (124) pour éclairer sélectivement la partie active du clavier (404) comprend l'éclairage de la partie active avec un niveau d'éclairement différent de celui d'une partie non active du clavier (404).

7. Procédé selon l'une quelconque des revendications précédentes, dans lequel la partie active est éclairée sélectivement par annulation optique.

8. Procédé selon l'une quelconque des revendications précédentes, dans lequel la partie active est éclairée sélectivement à l'aide d'une lumière colorée.

9. Procédé selon la revendication 8, dans lequel la partie active est éclairée sélectivement à l'aide d'une couleur différente de celle d'une partie non active du clavier (404).

10. Progiciel d'ordinateur destiné à permettre à un dispositif mobile (400) de fournir un éclairage sélectif d'une partie active d'un clavier (404) du dispositif mobile (400), le progiciel d'ordinateur comprenant un support lisible par ordinateur matérialisant un moyen de code de programme pouvant être exécuté par un processeur du dispositif mobile (400) afin de mettre en oeuvre le procédé selon l'une quelconque des revendications 1 à 9.
